# EUROPÄISCHE PATENTSCHRIFT

(11) **EP 3 890 148 B1**
(45) Veröffentlichungstag und Bekanntmachung des Hinweises auf die Patenterteilung: **23.09.2026**
(21) Anmeldenummer: 21163398.7
(22) Anmeldetag: 18.03.2021
(51) Int. Cl.: H02J 7/50, H02J 7/00, B60L 53/62, B60L 53/67

(54) **VERFAHREN ZUM LADEN VON MEHREREN BATTERIEN**
METHOD FOR CHARGING OF MULTIPLE BATTERIES
PROCÉDÉ DE CHARGE DE PLUSIEURS BATTERIES

(30) Priorität: 02.04.2020 DE 102020109214
(43) Veröffentlichungstag der Anmeldung: 06.10.2021
(73) Patentinhaber: STILL GmbH, 22113 Hamburg (DE)
(72) Erfinder: HOFFMANN, Ekkehard, 21037 Hamburg (DE)
(74) Vertreter: Patentship Patentanwaltgesellschaft

(56) Entgegenhaltungen:
- EP-A2- 2 388 884
- DE-A1- 102013 020 879
- JP-A- H1 080 071
- US-A- 5 808 442

## Beschreibung

Die Erfindung betrifft ein Verfahren zum Laden einer Reihenfolge von mindestens zwei Batterien, wobei mit einem Ladevorgang einer nachfolgenden Batterie bereits vor Beendigung eines vorher begonnenen Ladevorgangs mindestens einer vorherigen Batterie begonnen wird, sobald ein vorgegebener Grenzwert der Ladeleistung des vorher begonnenen Ladevorgangs unterschritten wird.

Der Begriff Batterie umfasst im Rahmen der vorliegenden Erfindung wiederaufladbare Batterien, die im strengeren Sinn als Akkumulatoren bezeichnet werden. Insbesondere im Zusammenhang mit elektrischen Antrieben, besonders im Zusammenhang mit batterie-elektrisch angetriebenen Flurförderzeugen, hat sich allerdings auch hierfür der Begriff Batterie bzw. Traktionsbatterie eingebürgert, so dass er im Folgenden verwendet wird.

Bei Flurförderzeugen ist es üblich und Stand der Technik, dass Traktionsbatterien entweder bei einem Mehrschichtbetrieb zum Laden aus einem Batteriefach entnommen und gegen eine aufgeladene Traktionsbatterie ausgewechselt werden, oder der Fahrer gegen Ende seiner Arbeitsschicht ein Ladegerät über eine Steckerverbindung mit der Traktionsbatterie verbindet, um diese während der Arbeitspause aufzuladen. Typischerweise erfolgt dies pro Arbeitsschicht einmal, da eine Traktionsbatterie eines batterieelektrischen Flurförderzeugs im Regelfall so bemessen wird, dass mit einer Ladung der Traktionsbatterie eine komplette Arbeitsschicht gefahren und gearbeitet werden kann.

Werden mehrere Flurförderzeuge in einem Fuhrpark eingesetzt, ist es wünschenswert, mehrere Batterien gleichzeitig laden zu können. Hierfür können Mehrfachladegeräte oder mehrere, insbesondere über eine Schnittstelle miteinander kommunizierende, Einzelladegeräte vorgesehen sein, die üblicherweise an einer gemeinsamen Netzinstallation angeschlossen sind. In den Ladegeräten sind Stromrichter, insbesondere Gleichrichter (AC/DC-Wandler) zum Umwandeln des Wechselstroms des Stromnetzes in Gleichstrom und Gleichspannungswandler (DC/DC-Wandler) zum Umwandeln einer Gleichspannung in eine höhere oder niedrigere Gleichspannung, verbaut.

Die beim gleichzeitigen Laden mehrerer Batterien mögliche Gesamt-Ladeleistung ist durch die Netzinstallation, insbesondere durch Kabel, Sicherungen und Stecker, sowie durch die Stromrichter in den Ladegeräten begrenzt.

Wenn die Summe der Ladeleistungen aller DC/DC-Wandler die Ladeleistungen aller AC/DC-Wandler oder die Ladeleistung der Netzinstallation übersteigt, darf ein Ladevorgang nicht gestartet werden.

In der Praxis muss daher die Zahl der gleichzeitig zu ladenden Batterien begrenzt und/oder die Gesamt-Ladeleistung verringert werden. Insgesamt verlängert sich dadurch die Gesamt-Ladezeit für das Laden mehrerer Batterien. Dies ist insbesondere beim Betreiben eines Fuhrparks mit einer Vielzahl von batterie-elektrisch betriebenen Flurförderzeugen wirtschaftlich nachteilig.

Aus der JP-H10 80071 A1 ist ein gattungsgemäßes Verfahren zum Laden einer Reihenfolge von mindestens zwei Batterien mit den Merkmalen des Oberbegriffs des Patentanspruchs 1 bekannt.

Aus der EP 2 388 884 A2 ist ein Verfahren zum Empfangen von Ladung, ein Verfahren zum Steuern der Ladung, eine Ladesteuereinheit und eine Ladeausrüstung zum Laden einer Batterie in einer mit einer Batterie versehenen Vorrichtung bekannt.

Die DE 10 2013 020 879 A1 offenbart ein Verfahren zum sukzessiven Aufladen einer ersten Batterie und einer zweiten Batterie.

Der vorliegenden Erfindung liegt die Aufgabe zugrunde, ein Verfahren der eingangs genannten Art so auszugestalten, dass eine Verringerung der Gesamt-Ladezeit beim Laden von mehreren Batterien ermöglicht wird.

Diese Aufgabe wird erfindungsgemäß dadurch gelöst, dass der vorgegebene Grenzwert der Ladeleistung 50 bis 80 %, insbesondere 60 bis 70 %, der maximalen Ladeleistung des Ladevorgangs der vorherigen Batterie beträgt.

Erfindungsgemäß beträgt der vorgegebene Grenzwert der Ladeleistung 50 bis 80 %, insbesondere 60 bis 70 %, der maximalen Ladeleistung des Ladevorgangs der vorherigen Batterie. Da die Ladeleistungs-Kennlinie des vorangegangenen Ladevorgangs nicht auf Null abfällt, sondern sich nach dem Abfall zunächst auf einem niedrigen Niveau, von beispielsweise 2000 Watt, stabilisiert, ergibt sich mit dieser Vorgabe, dass sich die Ladeleistungs-Kennlinien etwa in der Mitte der abfallenden Flanke schneiden.

Dabei weisen die Ladevorgänge bevorzugt Ladeleistungs-Kennlinien auf, die nach einem plateau-ähnlichen Maximal-Niveau einer maximalen Ladeleistung in einer steilen Flanke auf ein plateau-ähnliches Niedrig-Niveau einer niedrigen Ladeleistung abfallen, wobei mit dem Ladevorgang der nachfolgenden Batterie begonnen wird, sobald die Ladeleistungs-Kennlinie des vorher begonnen Ladevorgangs auf einen mittleren Bereich zwischen dem Maximal-Niveau und dem Niedrig-Niveau abgefallen ist, so dass die aufsteigende Ladeleistungs-Kennlinie des begonnenen Ladevorgangs der nachfolgenden Batterie die abfallende Flanke der Ladeleistungs-Kennlinie des vorher begonnen Ladevorgangs im mittleren Bereich schneidet.

Vorgeschlagen wird also eine Betriebsstrategie, welche die Leistung der Netzinstallation und/oder die Leistung des AC/DC-Wandlers besser ausnutzt und so die Ladedauer reduziert. Dies wird dadurch erreicht, dass mit dem Laden einer nachfolgenden Batterie nicht auf das Ende eines vorher begonnenen Ladevorgangs einer vorherigen Batterie gewartet wird, sondern der neue Ladevorgang bereits gestartet wird, wenn ein bestimmter Grenzwert der Ladeleistung des vorher begonnenen Ladevorgangs unterschritten wurde.

Bei dieser Betriebsstrategie wird ausgenutzt, dass insbesondere bei der Ladung von Blei-Säure-Batterien die maximale Ladeleistung nur kurzfristig benötigt wird. Bei Traktionsbatterien von Flurförderzeugen bleibt die Ladeleistung typischerweise nur über einen Zeitraum von etwa drei Stunden auf einem hohen Niveau von beispielsweise 7000 bis 8000 Watt und nimmt anschließend innerhalb von etwa einer Stunde auf ca. 2000 Watt ab. In einer grafischen Darstellung ergibt sich also eine Ladeleistungs-Kennlinie, die nach etwa drei Stunden mit einer steilen Flanke abfällt.

Der Erfindung liegt nun die Überlegung zugrunde, dass die Gesamt-Ladeleistung beim Laden mehrerer Batterien verringert werden kann, wenn der Ladevorgang der nächsten Batterie bereits gestartet wird, wenn die Ladeleistungs-Kennlinie des vorangegangenen Ladevorgangs abfällt. Dabei steigt die Ladeleistungs-Kennlinie des nachfolgenden Ladevorgangs steil an und schneidet die Ladeleistungs-Kennlinie des vorangegangenen Ladevorgangs möglichst in der Mitte der absteigenden Flanke. Somit ergibt sich eine Gesamt-Ladeleistung auf einem zeitlich verlängerten hohen Niveau.

In einer bevorzugten Ausgestaltung der Erfindung ist vorgesehen, dass der Ladevorgang der nachfolgenden Batterie mit einem geringen Ladestrom gestartet wird und der Ladestrom schrittweise erhöht wird.

Eine weitere Ausführungsform sieht vor, dass nach Beginn des Ladevorgangs der nachfolgenden Batterie der Ladestrom der vorherigen Batterie reduziert wird.

Zweckmäßigerweise werden die Ladevorgänge der Batterien mit mindestens einem Mehrfachladegerät durchgeführt, das an einer Netzinstallation angeschlossen ist.

Die Ladevorgänge der Batterien können auch mit miteinander und/oder einer zentralen Steuereinheit kommunizierenden Ladegeräten durchgeführt werden, die zweckmäßigerweise an einer gemeinsamen Netzinstallation angeschlossen sind.

Die Erfindung kann mit besonderem Vorteil bei Fuhrparks von batterie-elektrisch betriebenen Flurförderzeugen eingesetzt werden. Somit werden als Batterien vorteilhafterweise Traktionsbatterien von Flurförderzeugen verwendet.

Dabei werden besonders bevorzugt als Batterien Blei-Säure-Batterien verwendet.

Es können auch Lithium-Ionen-Batterien als Batterien verwendet werden.

Weitere Vorteile und Einzelheiten der Erfindung werden anhand der in den schematischen Figuren dargestellten Ausführungsbeispiele näher erläutert. Hierbei zeigen
- Figur 1: eine grafische Darstellung einer typischen Ladeleistungs-Kennlinie einer Blei-Säure-Batterie eines Flurförderzeugs und
- Figur 2: eine grafische Darstellung der Ladeleistungs-Kennlinien von drei überlagerten Ladevorgängen von drei Blei-Säure-Batterie von Flurförderzeugen nach der erfindungsgemäßen Betriebsstrategie.

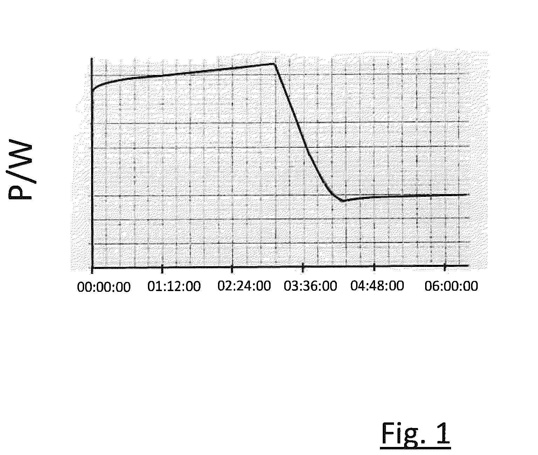

In der Figur 1 ist eine typische Ladeleistungs-Kennlinie einer Blei-Säure-Batterie grafisch dargestellt, die als Traktionsbatterie eines Flurförderzeugs ausgebildet ist. Dabei ist auf der horizontalen Achse die Zeit in Stunden:Minuten:Sekunden und auf der vertikalen Achse die Ladeleistung P in Watt (W) aufgetragen. Die Ladeleistung bleibt etwa in den ersten drei Stunden auf einem hohen Niveau und fällt dann innerhalb von etwa einer Stunde steil ab, um sich anschließend auf einem niedrigen Niveau zu stabilisieren. Dieser Grafik kann entnommen werden, dass bei der Ladung insbesondere einer Blei-Säure-Batterie die maximale Ladeleistung nur kurzfristig benötigt wird. Dieser Sachverhalt wird mit dem erfindungsgemäßen Verfahren ausgenutzt, um die Gesamt-Ladedauer beim Laden von mehreren Batterien zu verringern.

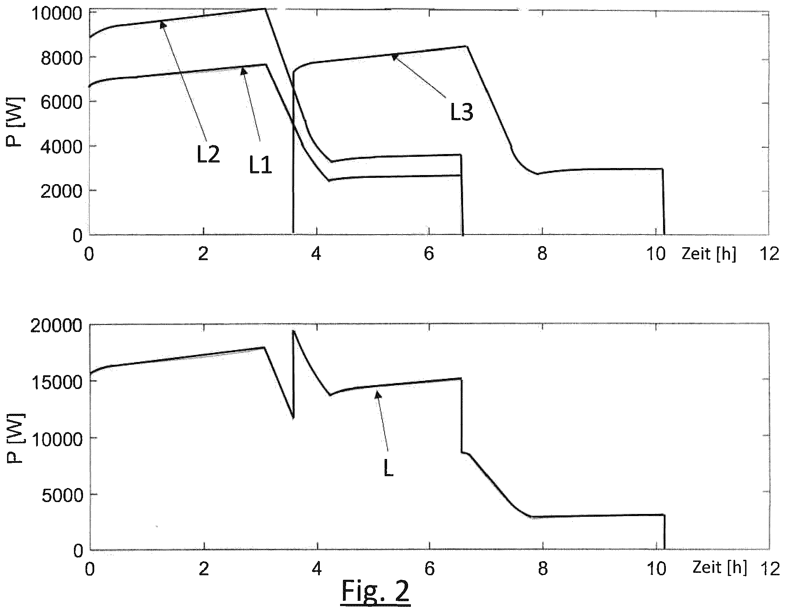

Die Figur 2 zeigt im oberen Bild eine grafische Darstellung der Ladeleistungs-Kennlinien von drei überlagerten Ladevorgängen von drei Blei-Säure-Batterien, die als Traktionsbatterien von Flurförderzeugen ausgebildet sind, nach der erfindungsgemäßen Betriebsstrategie. Das Laden der drei Batterien kann mit einem Mehrfachladegerät durchgeführt werden, an das die drei Batterien angeschlossen sind. Alternativ kann das Laden der drei Batterien mit mehreren Ladegeräten durchgeführt werden, wobei jeweils ein Ladegerät eine Batterie lädt und die Ladegeräte miteinander direkt oder mittels einer zentralen Steuereinheit kommunizieren. Hier ist ebenfalls auf der horizontalen Achse die Zeit in Stunden und auf der vertikalen Achse die Ladeleistung P in Watt (W) aufgetragen. Im vorliegenden Beispiel werden zwei Batterien gleichzeitig geladen. Die beiden Ladeleistungs-Kennlinien der beiden Batterien sind mit L1 und L2 bezeichnet. Die Ladeleistungs-Kennlinien L1 und L2 bleiben zunächst über einen Zeitraum von etwa drei Stunden auf einem hohen Niveau von ca. 7000 Watt (L1) beziehungsweise 9000 bis 10000 Watt (L2). Anschließend fallen sie innerhalb von etwa einer Stunde stark ab und stabilisieren sich für etwa zwei Stunden auf einem niedrigen Niveau von etwa 3000 Watt, bevor sie auf Null abfallen.

Die erfindungsgemäße Betriebsstrategie sieht nun vor, dass mit dem Start des Ladevorgangs der dritten Batterie nicht gewartet wird, bis die Ladevorgänge der beiden anderen Batterien bereits beendet sind. Stattdessen wird der neue Ladevorgang bereits gestartet, wenn die Ladeleistungen der vorherigen Ladevorgänge auf vorgegebene Ladeleistungen von 60 bis 70 % der maximalen Ladeleistungen abgefallen sind. Somit schneidet die nach dem Start steil ansteigende Ladeleistungs-Kennlinie L3 der dritten Batterie die Ladeleistungs-Kennlinien L1 und L2 der beiden anderen Batterien etwa in der Mitte der abfallenden Flanken von L1 und L2.

Die Überlagerung der Ladeleistungs-Kennlinien L1, L2 und L3 der drei Batterien ergibt den im unteren Bild der Figur 2 dargestellten Verlauf der Gesamt-Ladeleistungs-Kennlinie L. Es ergibt sich eine Gesamt-Ladeleistung auf einem zeitlich verlängerten hohen Niveau.

Mit der erfindungsgemäßen Betriebsstrategie eines Mehrfachladegeräts oder mehrerer miteinander kommunizierender Einzel-Ladegeräte kann eine Verringerung der Ladezeit mehrerer Batterien bei leistungsbegrenzter Netzinstallation und/oder bei leistungsbegrenzten Stromrichtern, insbesondere AC/DC-Wandler, der Batterien erzielt werden.

## Patentansprüche

1. Verfahren zum Laden einer Reihenfolge von mindestens zwei Batterien, wobei mit einem Ladevorgang einer nachfolgenden Batterie bereits vor Beendigung eines vorher begonnenen Ladevorgangs mindestens einer vorherigen Batterie begonnen wird, sobald ein vorgegebener Grenzwert der Ladeleistung des vorher begonnenen Ladevorgangs unterschritten wird, **dadurch gekennzeichnet, dass** der vorgegebene Grenzwert der Ladeleistung 50 bis 80 %, insbesondere 60 bis 70 %, der maximalen Ladeleistung des Ladevorgangs der vorherigen Batterie beträgt.

2. Verfahren nach Anspruch 1, **dadurch gekennzeichnet, dass** die Ladevorgänge Ladeleistungs-Kennlinien (L1, L2, L3) aufweisen, die nach einem plateau-ähnlichen Maximal-Niveau einer maximalen Ladeleistung in einer steilen Flanke auf ein plateau-ähnliches Niedrig-Niveau einer niedrigen Ladeleistung abfallen, wobei mit dem Ladevorgang der nachfolgenden Batterie begonnen wird, sobald die Ladeleistungs-Kennlinie (L1; L2) des vorher begonnen Ladevorgangs auf einen mittleren Bereich zwischen dem Maximal-Niveau und dem Niedrig-Niveau abgefallen ist, so dass die aufsteigende Ladeleistungs-Kennlinie (L3) des begonnenen Ladevorgangs der nachfolgenden Batterie die abfallende Flanke der Ladeleistungs-Kennlinie (L1; L2) des vorher begonnen Ladevorgangs im mittleren Bereich schneidet.

3. Verfahren nach Anspruch 1 oder 2, **dadurch gekennzeichnet, dass** der Ladevorgang der nachfolgenden Batterie mit einem geringen Ladestrom gestartet wird und der Ladestrom schrittweise erhöht wird.

4. Verfahren nach einem der Ansprüche 1 bis 3, **dadurch gekennzeichnet, dass** nach Beginn des Ladevorgangs der nachfolgenden Batterie der Ladestrom der vorherigen Batterie reduziert wird.

5. Verfahren nach einem der Ansprüche 1 bis 4, **dadurch gekennzeichnet, dass** die Ladevorgänge der Batterien mit mindestens einem Mehrfachladegerät durchgeführt werden.

6. Verfahren nach einem der Ansprüche 1 bis 5, **dadurch gekennzeichnet, dass** die Ladevorgänge der Batterien mit miteinander und/oder einer zentralen Steuereinheit kommunizierenden Ladegeräten durchgeführt werden.

7. Verfahren nach einem der Ansprüche 1 bis 6, **dadurch gekennzeichnet, dass** als Batterien Traktionsbatterien von Flurförderzeugen verwendet werden.

8. Verfahren nach einem der Ansprüche 1 bis 7, **dadurch gekennzeichnet, dass** als Batterien Blei-Säure-Batterien verwendet werden.

9. Verfahren nach einem der Ansprüche 1 bis 7, **dadurch gekennzeichnet, dass** als Batterien Lithium-Ionen-Batterien verwendet werden.

## Claims

1. Method for charging a sequence of at least two batteries, wherein a charging process of a subsequent battery is already started before completion of a previously started charging process of at least one previous battery as soon as a specified limit value for the charging power of the previously started charging process is undershot, **characterized in that** the specified limit value of the charging power is 50 to 80%, in particular 60 to 70%, of the maximum charging power of the charging process of the previous battery.

2. Method according to Claim 1, **characterized in that** the charging processes have charging power characteristics (L1, L2, L3) which, after a plateau-like maximum level of a maximum charging power, drop in a steep slope to a plateau-like low level of a low charging power, wherein the charging process of the subsequent battery is started as soon as the charging power characteristic curve (L1; L2) of the previously started charging process has dropped to a medium range between the maximum level and the low level, so that the rising charging power characteristic curve (L3) of the started charging process of the subsequent battery intersects the falling edge of the charging power characteristic curve (L1; L2) of the previously started charging process in the middle range.

3. Method according to Claim 1 or 2, **characterized in that** the charging process of the subsequent battery is started with a low charging current and the charging current is gradually increased.

4. Method according to any of Claims 1 to 3, **characterized in that** the charging current of the previous battery is reduced after the start of the charging process of the subsequent battery.

5. Method according to any of Claims 1 to 4, **characterized in that** the charging processes of the batteries are carried out by at least one multiple-device charger.

6. Method according to any of Claims 1 to 5, **characterized in that** the charging processes of the batteries are carried out by chargers which communicate with each other and/or a central control unit.

7. Method according to any of Claims 1 to 6, **characterized in that** traction batteries of industrial trucks are used as batteries.

8. Method according to any of Claims 1 to 7, **characterized in that** lead-acid batteries are used as batteries.

9. Method according to any of Claims 1 to 7, **characterized in that** lithium-ion batteries are used as batteries.

## Revendications

1. Procédé pour la charge d'une succession d'au moins deux batteries, dans lequel un processus de charge d'une batterie consécutive démarre déjà avant la fin d'un processus de charge démarré au préalable d'au moins une batterie préalable, dès qu'on passe en-dessous d'une valeur limite spécifiée de la puissance de charge du processus de charge démarré au préalable, **caractérisé en ce que** la valeur limite spécifiée de la puissance de charge représente 50 à 80%, en particulier 60 à 70%, de la puissance de charge maximale du processus de charge de la batterie préalable.

2. Procédé selon la revendication 1, **caractérisé en ce que** les processus de charge présentent des courbes caractéristiques de puissance de charge (L1, L2, L3) qui, après un niveau maximal analogue à un plateau d'une puissance de charge maximale, chutent selon une pente raide à un niveau bas analogue à un plateau d'une puissance de charge basse, le processus de charge de la batterie consécutive étant démarré dès que la courbe caractéristique de puissance de charge (L1 ; L2) du processus de charge démarré au préalable a chuté à un niveau médian entre le niveau maximal et le niveau bas de telle sorte que la courbe caractéristique de puissance de charge (L3) croissante du processus de charge qui a démarré de la batterie consécutive coupe le flan qui chute de la courbe caractéristique de puissance de charge (L1 ; L2) du processus de charge démarré au préalable dans la zone médiane.

3. Procédé selon la revendication 1 ou 2, **caractérisé en ce que** le processus de charge de la batterie consécutive est démarré à un faible courant de charge et le courant de charge est augmenté progressivement.

4. Procédé selon l'une des revendications 1 à 3, **caractérisé en ce qu'**après le début du processus de charge de la batterie consécutive, le courant de charge de la batterie préalable est réduit.

5. Procédé selon l'une des revendications 1 à 4, **caractérisé en ce que** les processus de charge des batteries sont réalisés à l'aide d'au moins un chargeur multiple.

6. Procédé selon l'une des revendications 1 à 5, **caractérisé en ce que** les processus de charge des batteries sont réalisés à l'aide de chargeurs communiquant les uns avec les autres et/ou avec unité de commande centrale.

7. Procédé selon l'une des revendications 1 à 6, **caractérisé en ce que** des batteries de traction de chariots de manutention sont utilisées comme batteries.

8. Procédé selon l'une des revendications 1 à 7, **caractérisé en ce que** des batteries au plomb-acide sont utilisées comme batteries.

9. Procédé selon l'une des revendications 1 à 7, **caractérisé en ce que** des batteries au lithium-ion sont utilisées comme batteries.
